# EUROPÄISCHE PATENTANMELDUNG

(11) **EP 1 529 669 A2**
(43) Veröffentlichungstag der Anmeldung: **11.05.2005**
(21) Anmeldenummer: 04025748.7
(22) Anmeldetag: 29.10.2004
(51) Int. Cl.: B60D 1/66

(54) **Vorrichtung zum Abstützen der Deichsel eines Anhängers**

(30) Priorität: 31.10.2003 DE 10351103; 27.11.2003 DE 20318555 U
(71) Anmelder: Knippschild, Gerd, D-24109 Kiel (DE)
(72) Erfinder: Knippschild, Gerd, D-24109 Kiel (DE)
(74) Vertreter: Meyer, Ludgerus A.

(57) **Zusammenfassung**

Die Erfindung betrifft eine Vorrichtung zum Abstützen der Deichsel eines Anhängers für ein Fahrzeug mittels eines höhenverstellbaren Stützrades (1), das am unteren Ende einer vertikal verstellbaren Spindelrohrs (7) befestigt ist, welche in einem an der Deichsel befestigten Rohrstück (14) geführt ist. Erfindungsgemäß ist das Rohrstück (14) an seinem unteren Ende mit einem seitlich abstehenden Flansch (10, 11) versehen, der derart am Rohrstück (14) angeordnet ist, dass beim Anheben des Stützrades der Flansch (10, 11) gegen die Lauffläche des Stützrades (1) andrückt.

## Beschreibung

Die vorliegende Erfindung betrifft eine Vorrichtung zum Abstützen der Deichsel eines Anhängers nach dem Oberbegriff des Anspruchs 1.

Anhänger für Pkws sind in der Regel ungebremst und weisen eine fest angeordnete Deichsel auf. Sie sind insbesondere einachsig ausgebildet. Um den Anhänger zum Be- und Entladen horizontal auszurichten, enthalten die meisten Anhänger ein an der Deichsel befestigtes Stützrad, das mittels Spindel auf und ab bewegt werden kann. Im angehobenen Zustand der Anhängerdeichsel kann der Anhänger dann in waagerechter Stellung verfahren werden und z.B. zum Anhängen an die Anhängerkupplung eines Fahrzeugs an dieses herangefahren werden. Nach dem Ankoppeln wird das Stützrad dann mittels der Spindel angehoben und/oder ein die Spindel aufnehmendes Rohrstück durch Lösen und Wiederbefestigen einer Befestigungsschelle angehoben.

Die Schelle kann auch so gelöst werden, dass die gesamte Stützradanordnung entfernt werden kann.

Der Nachteil üblicher Stützradanordnungen besteht darin, dass es bei ausgefahrenem Stützrad möglich ist, dass der Anhänger, insbesondere auf abschüssigem Gelände, sich selbstständig in Bewegung setzt und Fahrzeuge oder andere Gegenstände beschädigen kann. Beim Ankuppeln an ein Fahrzeug besteht leicht Gefahr, dass die Bewegung des Anhängers in Richtung auf das Fahrzeug häufig nicht genügend von Hand abgebremst werden kann, so dass die Anhängerkupplung das Fahrzeug leicht beschädigen kann. Schließlich besteht ein Nachteil üblicher Stützradanordnungen darin, dass die Befestigung an der Anhängerdeichsel nicht besonders sicher ist.

Der Erfindung liegt die Aufgabe zugrunde, eine Vorrichtung zum Abstützen der Deichsel eines Anhängers mittels eines höhenverstellbaren Stützrades anzugeben, welche eine höhere Sicherheit gegen Wegrollen des Anhängers gewährleistet und insbesondere auch eine erhöhte Sicherheit der Befestigung am Anhänger ermöglicht.

Diese Aufgabe wird durch die im Anspruch 1 angegebene Erfindung gelöst. Vorteilhafte Weiterbildungen der Erfindung sind in Unteransprüchen angegeben.

Die erfindungsgemäße Vorrichtung ist an der Deichsel eines Anhängers, insbesondere eines kleinen Anhängers für einen Pkw befestigbar und ist dadurch gekennzeichnet, dass ein an der Deichsel befestigtes Rohrstück an seinem unteren Ende mit einem seitlich abstehenden Flansch versehen ist, der derart am Rohrstück angeordnet ist, dass beim Anheben des Stützrades der Flansch gegen die Lauffläche des Stützrades andrückt.

Die erfindungsgemäße Vorrichtung ist dadurch in der Lage, eine Bremswirkung auf das Stützrad auszuüben, wenn die Hubspindel das Stützrad in die obere Stellung gefahren hat. Damit ist eine verbesserte Standsicherheit des Anhängers gewährleistet. Wenn die Hubspindel des Stützrades nach unten ausgefahren wird, wird das Stützrad freigegeben, so dass der Anhänger frei bewegt werden kann.

Der Flansch befindet sich vorzugsweise lösbar am unteren Ende des Rohrstücks. Die Lösbarkeit des Flansches erlaubt es, den Flansch auch an bereits bestehenden Stützradanordnungen anzubringen. Der Flansch greift erst bei voll eingefahrenem Spindelrohr in die Lauffläche des Stützrades ein. Beim Herausdrehen mit der Spindel nach unten löst sich das Stützrad vom Flansch und kann dann frei drehen. Um eine Abbremsung des Stützrades in allen Drehrichtungen zu ermöglichen, weist der Flansch insbesondere eine umlaufend abstehende Ringscheibe auf.

Der Flansch kann an seiner Unterseite auch wenigstens einen nach innen gerichteten Ansatz aufweisen, dessen Innendurchmesser kleiner als der Außendurchmesser des Rohrstücks gewählt ist. Der Ansatz kann damit entweder von der Unterseite des Rohrstücks gegen das Rohrstück anstoßen oder auch in Ausschnitte des Rohrstücks eingreifen, so dass einerseits eine Verdrehung des Flansches verhindert ist und andererseits eine Verschiebung des Flansches nach oben ausgeschlossen ist.

Alternativ kann das Rohrstück einen angestauchten oder angeschweißten nach außen ragenden unteren Bereich aufweisen, der die Funktion des Flansches. übernehmen kann.

Das Stützrad ist in einer bevorzugten Ausführungsform in einer Stützgabel aufgenommen, die an einer am unteren Ende des Spindelrohrs verschieblich gelagerten Hülse befestigt ist, die auf einem in das untere Ende des Spindelrohrs eingesetzten Halterohr verschieblich ist. Durch die vertikale Verschiebemöglichkeit der Hülse ist es möglich, dass beim Anheben der Deichsel die Hülse nach unten rutscht und damit das Stützrad freigegeben wird, während beim Absenken der Deichsel sich die Hülse nach oben schiebt und das Stützrad gegen den Flansch andrückt. Vorzugweise ist die Hülse dazu zwischen einem oberen und einem unteren Anschlag auf dem Haltestab verschieblich gelagert. Dadurch ist der Verschiebeweg der Hülse begrenzt, so dass nur in der annähernd obersten Stellung des Spindelrohrs die Möglichkeit besteht, das Stützrad über den Flansch mittels der Spindel zu blockieren.

Die Hülse kann auch unter Federkraft nach unten leicht vorgespannt sein, so dass das Stützrad in oberer Stellung des Spindelrohrs nur bei genügend Auflast auf die Deichsel abgebremst wird. Sobald das Spindelrohr nach unten gefahren wird, nimmt der obere Anschlag der Hülse bzw. das untere Ende des Spindelrohrs die Hülse mit und gibt das Stützrad frei.

Alternativ kann auch vorgesehen sein, dass das Stützrad in einer Hilfsgabel aufgenommen ist, die unter Federkraftvorspannung in der Stützgabel gelagert ist, die am unteren Ende des Spindelrohrs angeordnet ist. Auch hierbei erfolgt eine Blockierung des Stützrades nur dann, wenn genügend Last auf der Deichsel ruht.

Die Stützgabel kann auch eine zusätzliche manuell betätigbare Radbremse enthalten, die auch dann betätigbar ist, wenn das Spindelrohr der Stützradanordnung sich im ausgefahrenen Zustand befindet.

Zur Erhöhung der Sicherheit gegen Herausfallen der Stützradanordnung aus der Befestigungsschelle an der Deichsel kann vorgesehen sein, dass das Rohrstück an seinem oberen Ende einen seitlich vorstehenden Anschlag aufweist. Wenn daher die Befestigungsschelle nicht ausreichend gesichert sein sollte, verhindert der Anschlag das Herausfallen der Stützradanordnung aus der Schellenbefestigung.

Insbesondere ist der Anschlag als umlaufender Ring am oberen Ende des Rohrstücks befestigt, wobei die Befestigung an dem Rohrstück vorzugsweise über eine Schraubbefestigung realisiert ist. Damit kann der Anschlag auch nachträglich an bestehenden Stützradanordnungen angebracht werden.

Alternativ kann das obere Ende des Rohrstücks auch eine umlaufende Stauchung und Pressung enthalten, die einen vergrößerten Durchmesser bildet.

Die Erfindung verbessert die Sicherheit von Stützradanordnungen an Anhängern, insbesondere Kleinanhängern für Pkws, beträchtlich. Die Gefahr, dass sich Anhänger bei Wind selbstständig machen, auf eine Fahrbahn rollen oder andere Fahrzeuge beschädigen, wird erheblich verringert. Weitere Sicherungsmaßnahmen, wie z.B. eine Befestigung an Bäumen oder Zäunen, ist nicht mehr erforderlich. Die Verwendung eines oberen Anschlags verhindert auch ein selbsttätiges Lösen der Stützradanordnung während der Fahrt und sichert so auch den Fahrzeugverkehr insgesamt und vermeidet Unfälle mit anderen Verkehrsteilnehmern.

Da das Stützrad in blockiertem Zustand das Spindelrohr seitlich belastet, ist dieses fest im Rohrstück verankert und kann sich daher während der Fahrt nicht selbsttätig lösen und herausschrauben.

Die Erfindung wird nachstehend anhand eines Ausführungsbeispiels näher erläutert. Es zeigen:
- Fig. 1: eine Stützradanordnung im entlasteten angehobenen Zustand der Deichsel,
- Fig. 2: eine auf dem Boden stehende Stützradanordnung im gebremsten Zustand und
- Fig. 3: eine Stützradanordnung in voll eingefahrenem Zustand des Spindelrohrs.

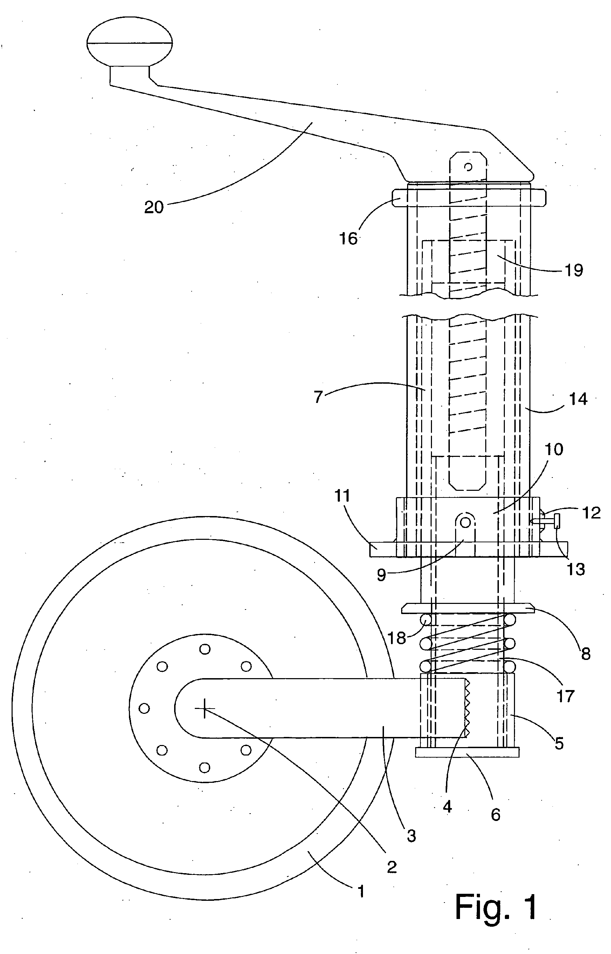

Fig. 1 zeigt ein Stützrad 1, das über das Lager 2 in einer Stützgabel 3 drehbar befestigt ist. Die Stützgabel 3 ist über die Verschweißung 4 an einer Hülse 5 befestigt, die axial verschieblich und drehbar auf einem rohr- oder stabförmigen Halterohr 17 am unteren Ende des Spindelrohrs. 7 angeordnet ist. Der Verschiebeweg der Hülse 5 auf dem Halterohr 17 ist nach unten durch den unteren Anschlag 6 und nach oben durch den oberen Anschlag 8 begrenzt, der auch durch das untere Ende des Spindelrohrs 7 gebildet sein kann. Die Anschläge 6 und 8 sind an dem Halterohr 17 befestigt, insbesondere verschweißt oder verschraubt. Der obere Anschlag 8 kann auch verschieblich auf dem Halterohr 17 angeordnet und z. B. durch eine Scheibe gebildet sein.

Das Spindelrohr 7 ist in an sich bekannter Weise längsverschieblich im Rohrstück 14 auf und ab bewegbar. In das obere Ende des Spindelrohrs ist dazu ein Gewindestück 19 eingesetzt, das durch Drehen der Kurbel 20 auf und ab bewegbar ist und damit das am unteren Ende des Spindelrohrs angeordnete Stützrad anheben und absenken kann. Die Fig. 1 zeigt das Spindelrohr 7 in einer oberen Stellung. Am Außenumfang des das Spindelrohr 7 umgebenden Rohrstücks 14 ist an dessen unterem Ende ein Flansch mit einer Flanschbefestigung 10 und einer umlaufenden Ringscheibe 11 angeordnet. Der Flansch wird insbesondere mittels einer an der Flanschbefestigung 10 angeschweißten Mutter 12 über eine Schraube 13 befestigt. Zur Verdrehsicherung des Flansches am Rohrstück 14 kann die Schraube 13 in Ausnehmungen oder Bohrungen des Rohrstücks 14 eingreifen. Ferner kann der Flansch einen nach innen gerichteten Ansatz aufweisen, der z.B. in eine Aussparung am unteren Ende des Rohrstücks eingreift. Diese Aussparung dient üblicherweise dazu, dass die Stützgabel 3 beim Anheben des Spindelrohrs 7 verdrehfest in dem Rohrstück 14 gesichert werden kann.

Zwischen dem oberen Anschlag und der Hülse ist das Halterohr 17 von einer Feder 18 umgeben, die die Hülse nach unten leicht vorspannt.

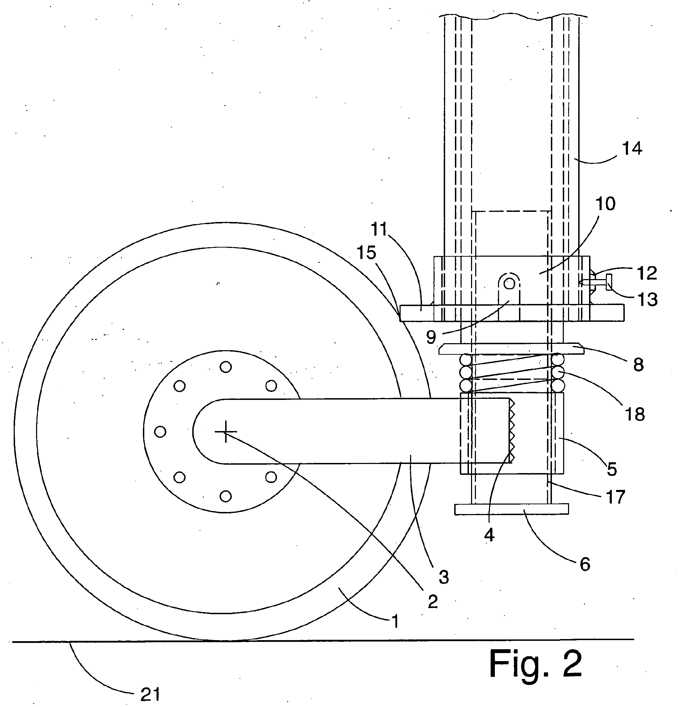

Während Fig. 1 die Stützradanordnung in entlasteter Stellung zeigt, zeigt Fig. 2 die Stützradanordnung in belastetem Zustand, wenn das Stützrad auf dem Boden steht.

Durch die Belastung der Stützradanordnung hat sich die Hülse 5 auf dem Halterohr 17 vom unteren Anschlag 6 in Richtung auf den oberen Anschlag 8 verschoben. Dabei gerät das Reifenprofil des Stützrades 1 an eine Kante 15 der Ringscheibe 11, so dass dadurch eine Drehung des Stützrades 1 verhindert wird. Aufgrund der ringförmigen Anordnung der Ringscheibe 11 kann die Abbremsung in jeder beliebigen Stellung des Stützrades 1 bewirkt werden.

Bei einem Ausfahren des Spindelrohrs 7 nach unten nimmt das untere Ende des Spindelrohrs 7 oder der obere Anschlag 8 die Hülse 5 mit und damit löst sich das Stützrad 1 von der Ringscheibe 11, so dass das Stützrad dann frei drehbar ist. Der Anhänger kann dann frei verfahren werden. Sobald das Spindelrohr wieder in eine obere Stellung aufgehoben ist, wird das Stützrad 1 erneut blockiert.

Wenn sich das Spindelrohr 7 nahe der oberen Stellung befindet, bewirkt ein leichtes Anheben der Deichsel, dass die Hülse 5 sich aufgrund der Feder 18 oder durch Schwerkraft auf dem Halterohr 17 nach unten bewegt und damit das Stützrad 1 freigibt. Der Anhänger kann dann mit etwas angehobener Deichsel frei bewegt werden.

Die Freigabe des Stützrades 1 kann damit lastabhängig gewählt werden, weil zwischen der Hülse 5 und dem oberen Anschlag 8 die Spiralfeder 18 eingesetzt ist. Dadurch erfolgt eine Abbremsung des Stützrades 1 nur dann, wenn auf die Stützradanordnung eine Last aufgebracht ist, die die Federkraft überwindet. Durch eine gewünschte Lastverteilung auf dem Anhänger kann wahlweise ein Zustand erreicht werden, der die freie Verfahrbarkeit des Anhängers gestattet, aber bei einer anderen Lastverteilung eine selbsttätige Abbremsung sichergestellt ist.

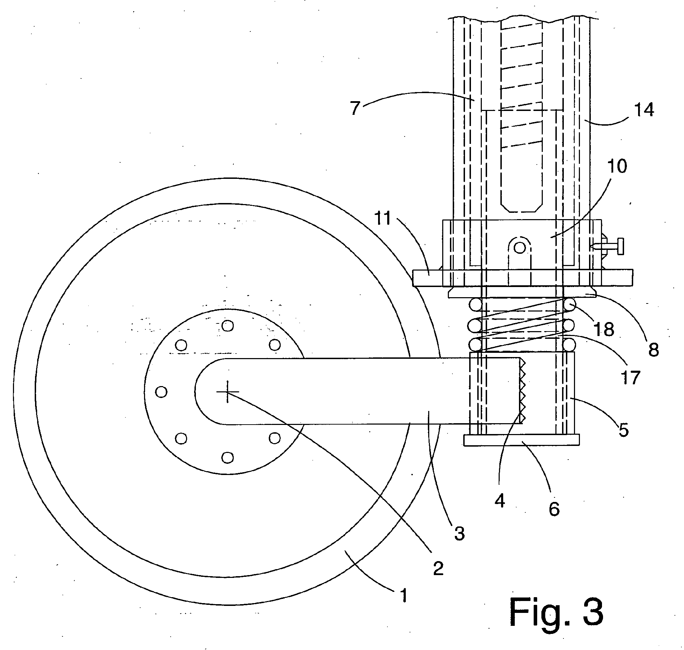

Fig. 3 zeigt die Stützradanordnung in oberer Endstellung des Spindelrohrs. Die Hülse 5 stößt dabei an den Anschlag 6 an, und das Stützrad 1 kontaktiert die Ringscheibe 11 unabhängig von der Belastung. Dieser Zustand sollte während der Fahrt eingenommen werden. Dabei wird einerseits das Stützrad blockiert und andererseits wird ein selbsttätiges Herausdrehen des Spindelrohrs 7 aus dem Rohrstück 14 verhindert, da sich das Spindelrohr 7 im Rohrstück 14 verklemmt.

Die Flanschanordnung 10, 11 kann aus Metall oder auch aus einem stabilen Kunststoff gebildet sein. Auch andere Materialien ausreichender Festigkeit sind möglich.

Gegenüber der Darstellung der Flanschanordnung 10, 11 in den Figuren 1 - 3 kann der Flansch auch mit geeignet angepasster Geometrie so ausgestaltet sein, dass sich die Ringscheibe 11 oder entsprechende Ansätze an der Oberseite der Flanschbefestigung 10 befinden.

Es kann auch vorgesehen sein, einen Ansatz zur Abbremsung des Stützrades unmittelbar durch Verschweißen an Rohrstück 14 zu befestigen, insbesondere, wenn dies bereits fabrikmäßig vorgenommen werden kann. Eine weitere Alternative besteht darin, das untere Ende des Rohrstücks aufzuweiten, um damit eine Durehmesservergrößerung des Rohrstücks entsprechend einem Flansch zu bilden.

Anstelle eines ringförmig das Rohrstück umgebenden Flansches kann das Rohrstück auch einzelne vorstehende Ansätze aufweisen, die den gleichen Zweck erfüllen.

Zur weiteren Erhöhung der Sicherheit gegen Herausfallen der Stützradanordnung aus ihrer Schellenbefestigung an der Deichsel kann vorgesehen sein, dass am oberen Ende des Rohrstücks 14 ein umlaufender Anschlag 16 befestigt ist, der sich im Befestigungszustand der Stützradanordnung oberhalb oder auch in der Schellenbefestigung an der Deichsel befindet. Der Anschlag 16 ist insbesondere als ringförmiger Anschlag auf das Rohrstück 14 aufgeschraubt, beispielsweise mittels einer quer durch den Anschlag 16 geführten Klemmschraube. Der Anschlag kann daher auch ohne weiteres an bestehende Stützradanordnungen angebracht werden. Er verhindert, dass die Stützradanordnung nach Lösen der Schellenbefestigung nach unten herausrutscht oder sich während der Fahrt löst, wenn die Schellenbefestigung nicht ausreichend festgezogen sein sollte. Der obere Anschlag kann auch durch eine umlaufende Aufweitung des Rohrstücks oder durch aufgeschweißte Nasen oder einen Ring gebildet sein.

Anstelle der Verwendung eines in das untere Ende der Spindel eingesetzten Halterohres kann die Hülse auch unmittelbar auf der Spindel gelagert sein, wenn der Anschlag 8 fest auf der Spindel angeordnet ist, um die Verschiebung der Hülse nach oben zu beschränken.

In einer einfachen Ausführungsform ist die Stützgabel unmittelbar an dem Spindelrohr angeschweißt. Auch hierbei blockiert das Stützrad beim Hochfahren des Spindelrohrs an dem am unteren Ende des Rohrstücks angebrachten Flansch.

Die Federanordnung 18 oder alternativ eine an einem Federgelenk gelagerte Stützgabel können auch verwendet werden, um aus dem Grad des Zusammendrückens der Feder ein Maß der Stützlast abzuleiten, z. B. über eine geeignet angebrachte Skala.

### Bezugszeichenliste

- 1: Stützrad
- 2: Lager
- 3: Stützgabel
- 4: Verschweißung
- 5: Hülse
- 6: unterer Anschlag
- 7: Spindelrohr
- 8: oberer Anschlag
- 9: Ausschnitt
- 10: Flanschbefestigung
- 11: Ringscheibe
- 12: Mutter
- 13: Schraube
- 14: Rohrstück
- 15: Kante
- 16: Anschlag
- 17: Halterohr
- 18: Feder
- 19: Gewindestück
- 20: Kurbel
- 21: Boden

## Patentansprüche

1. Vorrichtung zum Abstützen der Deichsel eines Anhängers für ein Fahrzeug mittels eines höhenverstellbaren Stützrades (1), das am unteren Ende einer vertikal verstellbaren Spindelrohrs (7) befestigt ist, welche in einem an der Deichsel befestigten Rohrstück (14) geführt ist, **dadurch gekennzeichnet, dass** das Rohrstück (14) an seinem unteren Ende mit einem seitlich abstehenden Flansch (10, 11) versehen ist, der derart am Rohrstück (14) angeordnet ist, dass beim Anheben des Stützrades der Flansch (10, 11) gegen die Lauffläche des Stützrades (1) andrückt.

2. Vorrichtung nach Anspruch 1, **dadurch gekennzeichnet, dass** der Flansch (10, 11) lösbar am unteren Ende des Rohrstücks (14) befestigt ist.

3. Vorrichtung nach Anspruch 1, **dadurch gekennzeichnet, dass** der Flansch als umlaufende Bördelung des unteren Endes des Rohrstücks ausgebildet ist.

4. Vorrichtung nach Anspruch 1 oder 2, **dadurch gekennzeichnet, dass** der Flansch (10, 11) eine umlaufend abstehende Ringscheibe (11) aufweist.

5. Vorrichtung nach Anspruch 1, 2 oder 4, **dadurch gekennzeichnet, dass** der Flansch (10, 11) an seiner Unterseite wenigstens einen nach innen gerichteten Ansatz aufweist, dessen Innendurchmesser kleiner als der Außendurchmesser des Rohrstücks (14) gewählt ist.

6. Vorrichtung nach einem der Ansprüche 1, 2, 4 oder 5, **dadurch gekennzeichnet, dass** der Flansch wenigstens einen nach innen gerichteten Ansatz aufweist, der in einen am unteren Ende des Rohrstücks (14) ausgebildeten Einschnitt (9) eingreifend ausgebildet ist.

7. Vorrichtung nach Anspruch 1, **dadurch gekennzeichnet, dass** das Stützrad (1) in einer Stützgabel (3) aufgenommen ist, die an einer auf dem unteren Ende des Spindelrohrs oder auf einem in das Spindelrohr (7) eingesetzten Halterohr (17) verschieblich gelagerten Hülse (5) befestigt ist.

8. Vorrichtung nach Anspruch 7, **dadurch gekennzeichnet, dass** die Hülse (5) zwischen oberen (8) und unteren (6) Anschlägen verschieblich ist.

9. Vorrichtung nach Anspruch 7 oder 8, **dadurch gekennzeichnet, dass** die Hülse (5) federnd gelagert ist.

10. Vorrichtung nach Anspruch 1, **dadurch gekennzeichnet, dass** das Stützrad (1) in einer Hilfsgabel aufgenommen ist, die in der Stützgabel gelagert ist, die am unteren Ende des Spindelrohrs angeordnet ist.

11. Vorrichtung nach. einem oder mehreren der vorhergehenden Ansprüche, **dadurch gekennzeichnet, dass** die Stützgabel (3) eine manuell betätigbare Radbremse aufweist.

12. Vorrichtung nach einem oder mehreren der vorhergehenden Ansprüche, **dadurch gekennzeichnet, dass** das Rohrstück (14) an seinem oberen Ende einen seitlich vorstehenden Anschlag (16) aufweist.

13. Vorrichtung nach Anspruch 12, **dadurch gekennzeichnet, dass** der Anschlag als umlaufender Ring ausgebildet ist.

14. Vorrichtung nach Anspruch 13, **dadurch gekennzeichnet, dass** der Ring mittels Schraubbefestigung an dem Rohrstück (14) befestigbar ist.

15. Vorrichtung nach Anspruch 13, **dadurch gekennzeichnet, dass** der Ring als Durchmesserausweitung des Rohrstücks ausgebildet ist.
